# EUROPEAN PATENT APPLICATION

(11) **EP 2 113 586 A2**
(43) Date of publication of application: **04.11.2009**
(21) Application number: 09251003.1
(22) Date of filing: 31.03.2009
(51) Int. Cl.: C23C 24/08, C23C 26/00, C23C 28/00

(54) **Low cost non-line-of-sight portective coatings**

(30) Priority: 01.05.2008 US 150780
(71) Applicant: United Technologies Corporation, Hartford, CT 06101 (US)
(72) Inventor: Bhatia, Tania, Middletown, CT 06457 (US); Beals, James T., West Hartford CT 06107 (US); Schmidt, Wayde R., Pomfret Center, CT 06259 (US)
(74) Representative: Tomlinson, Kerry John

(57) **Abstract**

Non-line-of-sight processes for coating complex shaped structures such as metal and ceramic based gas turbine components are disclosed. The processes rely on slurry based methods of coating application (50), and microwave or plasma arc lamp heating (70).

## Description

### BACKGROUND

This invention relates to low cost, high temperature protective coatings in general and particularly to coatings on parts difficult to coat by line-of-sight techniques.

Components within the hot gas path of a gas turbine engine are necessarily protected by a thermal barrier coating (TBC) system. TBC systems on nickel based, cobalt based and iron based superalloy turbine components include a thermal insulating ceramic top coat, referred to as the TBC, typically bonded to the component with an environmentally protective bond coat. Bond coat materials widely used in TBC systems include overlay coatings such as MCrAlX (where M is nickel, cobalt and/or iron, and X is yttrium or another rare earth or reactive element such as hafnium, zirconium, etc.) and diffusion coatings such as diffusion aluminides, notable examples of which are NiAl and NiAl(Pt). Ceramic materials and particularly binary yttria stabilized zirconia are widely used as TBC materials because of their high temperature capability, low thermal conductivity, and relative ease of deposition by plasma spraying, flame spraying and physical vapor deposition (PVD) particularly electron beam physical vapor deposition (EBPVD) techniques.

Similar systems called environmental barrier coatings (EBCs) are also required on silicon based ceramic gas turbine components such as silicon nitride and silicon carbide in order to protect the base materials from water vapor. At high temperatures water vapor will cause the formation of volatile Si species such as Si(OH)ₓ and SiO and result in material loss. EBC examples for ceramic turbine components include barium strontium alumino silicates (BSAS) and other alkaline earth alumino silicates as well as rare earth silicates and mullite. Bond coat materials widely used in EBC systems on silicon based substrates include layers of silicon, aluminosilicates, mullite, and rare earth silicates. Intermediate layers between the EBC and the bond coat are sometimes employed to moderate thermal expansion mismatch. EBC layers are typically deposited by air and vacuum plasma spraying (APS, VPS), high velocity oxyfuel (HVOF) spraying, chemical vapor deposition (CVD) and physical vapor deposition (PVD).

Many of the parts in gas turbine engine systems that require thermal and environmental protective coatings have complex shapes that are difficult to coat by conventional line-of-sight methods such as thermal spray and EBPVD. Examples of complex shaped parts in aircraft engines include vanes, rotors, blades, combustor liners, shrouds, transition ducts, airfoils, tubular gas turbine components, integral vane rings, and integrally bladed rotors. Coating complex shaped parts by line-of-sight processes is time consuming and expensive.

Non-line-of-sight coating processes are needed to increase throughput and decrease costs. Chemical vapor processes have been used but are expensive, slow and require a great deal of process development and operator skill, especially for coating large parts.

Consequently, there exists a need for a cost effective process for preparing and applying coatings that act as barriers to corrosive environments providing a thermal and environmental barrier function and extending the service life of complex shaped parts in all applicable industries. Additionally, the desire to decrease cost, improve versatility and throughput is also a need in the industries.

### SUMMARY

The present invention relates to processes suitable for the deposition of protective coatings on complex shaped substrates. The substrates may include, for example, nickel based, cobalt based or iron based superalloys and silicon based substrates which are used in articles and structures subjected to high temperature environments with water vapor present.

The processes of the present invention include lower cost non-line of sight processes and particularly dip coating, painting and spraying. Dip coating, painting and spraying can be used to deposit slurries containing a dispersion of particles of a protective coating or of precursors to a protective coating and other additives contributing to the properties of the final coating in a suitable liquid carrier. The dried, green deposited layers can be a bondcoat, a thermal barrier coat (TBC), an environmental barrier coat (EBC), a topcoat, and/or an intermediate layer coat.

In cases where the thermal treatment temperatures of the coating(s) would be high enough to be detrimental to metallic (e.g. superalloy) substrates, thermal treatment can be accomplished using alternate energy sources such as microwave energy or plasma arc energy.

### BRIEF DESCRIPTION OF THE DRAWINGS

FIG. 1 is a representation of a portion of a substrate coated with an optional bond coat layer, an optional intermediate layer, and a protective top coat layer.

FIG. 2 is a representation of a portion of a substrate coated with an optional bond coat layer and a protective top coat layer.

FIG. 3 is a representation of a portion of a substrate coated with a protective top coat layer.

FIG. 4 is a flow chart depicting a method for depositing a protective coating on a complex-shaped substrate.

FIGS. 5A and 5B show two silicon nitride ceramic integral components coated using an yttrium silicate slurry.

FIG. 6A and 6B show SEM images of cross-sections of vertically cracked oxide coatings produced via a slurry route and FIG. 6C shows an SEM image of a highly porous oxide ceramic coating produced via a slurry route.

FIG. 7 shows SEM images of a cross-section of yttria stabilized zirconia slurry based coating on a bondcoat produced using microwave assisted heating.

FIG. 8 shows a time temperature profile for plasma arc sintering of a YSZ coated NiO disk.

FIG. 9 shows the densification sequence for a YSZ coated NiO disk during sintering.

### DETAILED DESCRIPTION

The present invention relates to methods for applying a protective coating to complex shaped parts. The protective coating may serve as a thermal barrier coating on superalloy components exposed to high temperature combustion environments, or as an environmental barrier coating on silicon based components exposed to high temperature combustion environments.

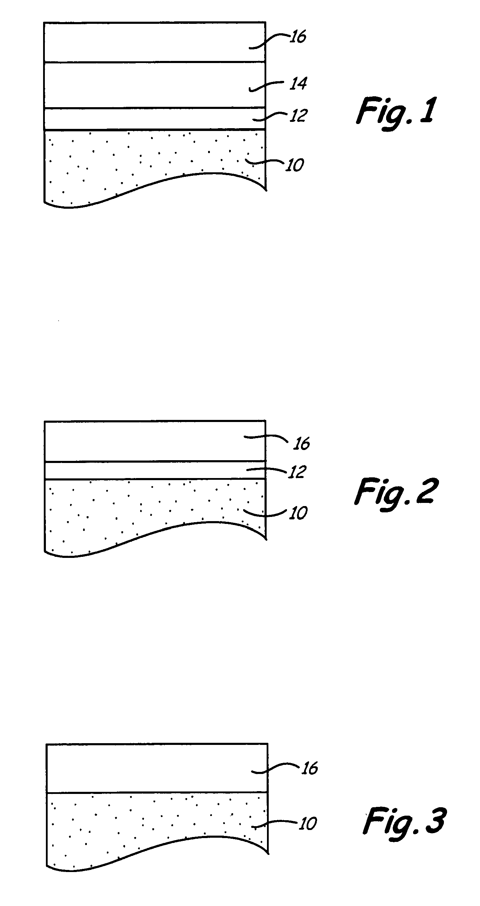

Referring to FIGS. 1-3, a portion of a complex shaped part is represented by a substrate 10. As used herein, the term "complex shaped part" means a part whose shape and geometry are not conducive to being coated by conventional line-of-sight methods known to one of ordinary skill in the art. Various industries employ complex shaped parts, and all of these complex shaped parts may be coated using the methods of the present invention. For example, aircraft engine manufacturers may utilize the methods of the present invention to coat complex shaped parts such as vanes, rotors, blades, combustor liners, shrouds, transition ducts, airfoils, and substantially tubular gas turbine engine components and integrally bladed rotors. Many other complex shaped turbine engine and turbomachinery components may be coated using the methods of the present invention. For example, an integral vane assembly which consists of a set of 8 to 20 vanes with integral outer and inner platforms may also be coated using the methods of the present invention.

Generally, the substrate 10 may comprise a ceramic material, a metal based material, combinations comprising at least one of the foregoing and the like. For example, the substrate may comprise nickel based, cobalt based or iron based superalloys or silicon based ceramic turbine materials such as silicon nitride or silicon carbide. The substrates may also include austenitic and ferritic grade steels and ceramic matrix composites in need of environmental/thermal protection.

Referring again to FIGS. 1-3 a bondcoat layer 12 may optionally be disposed onto the surface of substrate 10. Bondcoat layer 12 may comprise at least one metal based composition or one ceramic based composition suitable for use with the substrate materials. An intermediate layer 14 may optionally be disposed onto the bondcoat layer 12. Intermediate layer 14 may comprise at least one metal based composition or one ceramic based composition suitable for use with the substrate materials. A protective layer 16 may be disposed upon the substrate 10 or, if present, upon the bondcoat layer 12 or the intermediate layer 14. The protective layer 16 may comprise at least one refractory metal oxide. Any refractory metal oxide may be employed. In addition, the protective layer 16 may further comprise up to about 50 mole percent of at least one other refractory metal oxide.

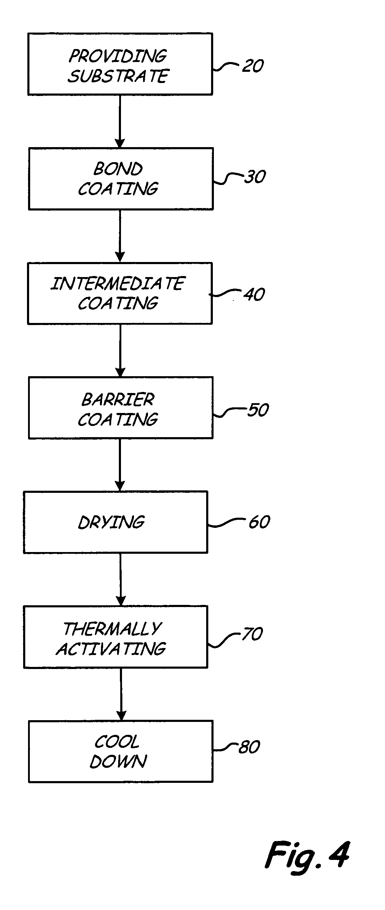

Referring to FIG. 4, the methods for applying the protective coatings described herein improve the overall adhesion and uniformity of the protective coatings upon the substrate. For purposes of illustration and not to be taken in a limiting sense, the methods may be described in a series of steps, some of which may be optional and whose order may be changed dependent upon factors such as, but not limited to, the intended application, process conditions, and the like. The method generally comprises providing a substrate as described above at step 20 in FIG. 4. The substrate may include an optional bondcoat layer 12 disposed between the substrate 10 and the aforementioned optional intermediate layer 14 as shown at step 30 in FIG. 4. The optional intermediate layer 14 may be disposed between the optional bondcoat layer 12 and the aforementioned protective layer 16 or between the substrate 10 and the aforementioned bondcoat layer 12 as shown at step 40 in FIG. 4.

The optional bondcoat layer 12 may be applied to the substrate 10 by any suitable manner known in the art such as, but not limited to, thermal spraying, slurry coating, vapor deposition (chemical and physical), combinations comprising at least one of the foregoing methods and the like. The optional intermediate layer 14 may also be applied to the substrate 10 or optional bondcoat layer 12 by the same methods and combinations as known in the art.

The final protective layer 16 is applied as shown at step 50 in FIG. 4. The final barrier coating, whether it be a thermal barrier coat (TBC) on a metallic substrate or an environmental barrier coat (EBC) on a ceramic substrate is preferably applied using a slurry dip coating technique, a painting technique or a spraying technique. The slurry dip coating technique generally comprises dipping the substrate with or without the optional bondcoat layer 12 and intermediate layer 14 into a slurry. The painting technique generally comprises applying the slurry to the substrate with a brush that has been dipped into the slurry. The spraying technique generally comprises spraying the slurry onto the substrate under pressure through a nozzle. The slurry may comprise a powder of the coating material or a precursor of the coating material , other additives in powder form that enhance adhesion to the substrate and/or alter the microstructure of the final coating, and a liquid carrier.

Following drying (step 60), the coating is thermally activated as shown in step 70 in FIG. 4. This can be accomplished with a furnace or kiln in air or controlled environment using methods known to those skilled in the art. In the case where the firing temperature of a ceramic containing TBC would be detrimental to the substrate, as discussed below, the inventive techniques of microwave assisted or plasma arc assisted thermal treatment are used as an embodiment of this invention. The final step in the process is a cool down, step 80.

Slurry based coating processes are extremely versatile. Metal based and ceramic based bondcoats and intermediate coats as well as thermal barrier and environmental barrier coats can all be applied as slurries. The chemistry of the coatings can be controlled by the ingredients added to the slurry. The structures of the coatings can be controlled by the ingredients and the processing. For instance, density can be controlled through the addition of sacrificial pore formers or hollow ceramic spheres. By varying the drying conditions, coatings can be created with segmented and/or vertically cracked microstructures as needed. Examples of controlled microstructures and slurry based coatings will be shown below.

Slurry based thermal barrier coatings and environmental barrier coatings need to be processed to temperatures above at least about 2400°F (1315°C) to about 2600°F (1426°C) to generate microstructures with acceptable strength and erosion resistance. Since silicon based components can withstand these temperatures, the coatings on these components are routinely fired at these temperatures after application. With superalloy components, on the other hand, the firing temperatures are excessive. Heating superalloys above about 2100°F (1148°C) for extended periods of time results in loss of properties due to severe overaging of the alloys. Also, powder forms of most ceramics of interest for use as thermal barrier coatings and metals, when sintered at temperatures below about 2100°F (1148°C), do not possess acceptable densities to provide the function required of them. While the increased porosity in the coatings sintered at these temperatures is often desirable to reduce thermal conductivity, the highly porous structure has unacceptably poor erosion resistance. This invention proposes unique and non-traditional approaches for heating slurry-based, green thermal and environmental barrier coatings without significant heating of the substrate, therefore avoiding the associated risk. Layered approaches where porous inner layers for thermal insulation are capped using dense outer layers for erosion/corrosion protection are possible using the processes described herein.

Two approaches are proposed to ensure that the green, unfired coating applied as slurries can sinter and adhere to the substrate without causing any damage to the mechanical properties of the substrate. These approaches are microwave heating and plasma arc lamp heating. It should be emphasized that in addition to ceramic top coats, metallic bond coats may also be deposited using the slurry approaches described above and post processing approaches described herein.

Microwave processing is a relatively mature technology and its use in the heating and sintering of ceramics and powder metals has been recognized. While ceramic and metal powder processing using microwaves has been the subject of numerous publications (e.g., "Microwave Processing of Ceramic Composites and Metallic Materials", D. Agrawal et al., in Microwave Solutions for Ceramic Engineers, Eds. D.D.E. Clark et al., Am. Ceram. Soc. Publ. pp. 205-228 (2005)), it has not yet been exploited for thermal or environmental barrier coating processing. The primary technical advantage of using microwave heating is that a dense (e.g. monolithic) metal substrate generally reflects microwave energy and therefore the metal part does not directly couple to the input energy. Metal and ceramic powders, on the other hand absorb microwave radiation and can be heated to temperatures in excess of about 2600°F (1426°C). It is therefore possible to heat the protective coating without detrimental overheating of the substrate.

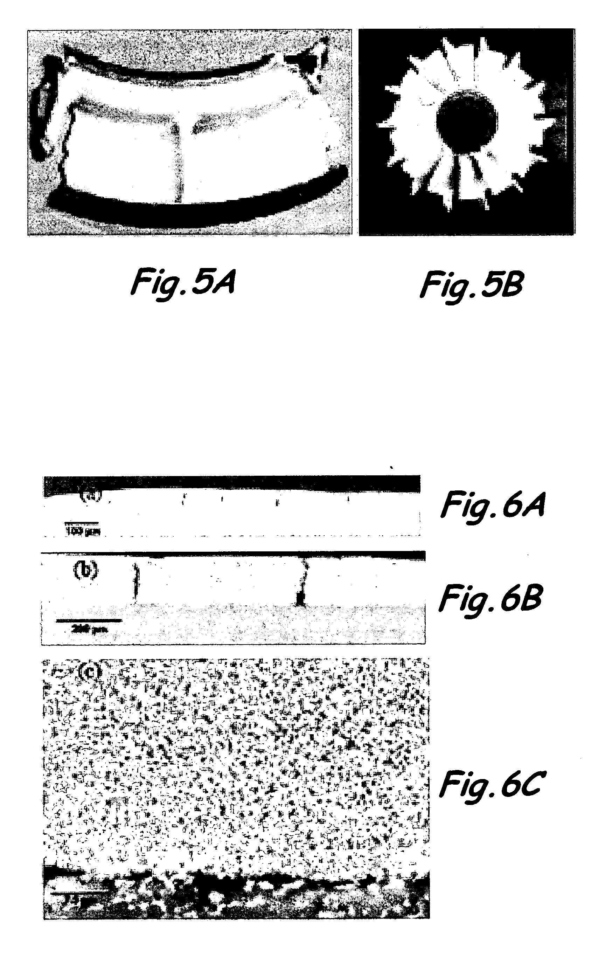

EXAMPLE 1. Silicon nitride integral ceramic components with complex shapes are shown in FIGS. 5A and 5B. The photo on the left (FIG. 5A) is a silicon nitride vane coated with a complex yttrium silicate environmental barrier coating applied by dip coating and processed according to FIG. 4. The photo on the right (FIG. 5B) is an integrally bladed rotor also coated with a complex yttrium silicate coating applied by dip coating and processed according to FIG. 4. The coated rotor was spun to 120,000 rpm and the coating remained intact.

EXAMPLE 2. Microstructural control can be achieved in slurry based coatings. FIGS. 6A and 6B show scanning electron micrographs of cross-sections of yttrium silicate environmental barrier coatings on silicon nitride substrates that were applied by dip coating. By controlling the drying and curing process, vertical cracks can be introduced into the coating as shown. The vertical cracks reduce the modulus of elasticity of the coating and allow the coating to deform without cracking during thermal cycling. The improved strain tolerance generally enhances coating life and retards spalling.

FIG. 6C illustrates the high level of porosity possible in similar coatings on a silicon nitride substrate as applied by dip coating and processed according to FIG. 4.

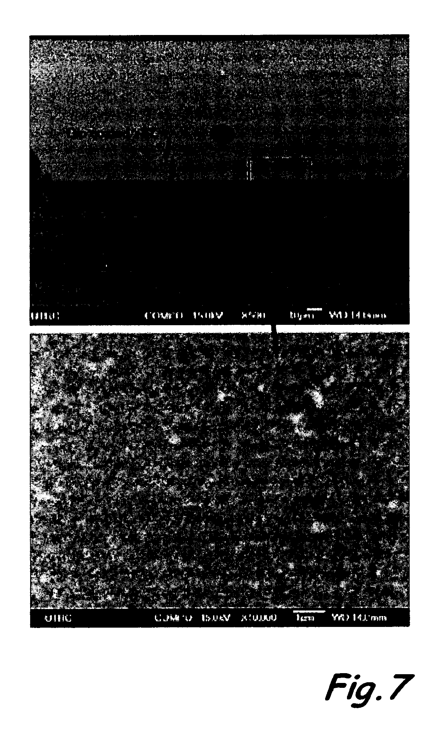

EXAMPLE 3. Slurry based ceramic thermal barrier coatings have been shown to densify on superalloy substrates by microwave assisted heating without degrading the properties of the substrate. FIG. 7 shows two SEM images of a cross-section of dip coated yttria stabilized zirconia (YSZ) thermal barrier coating on a bondcoat on a superalloy substrate. The upper photo shows a lower magnification view of the dip coated YSZ and the bondcoat. To form the coating the substrate was dip coated in the slurry and first dried for 2 hours in a conventional furnace. Following drying the part was processed in a microwave assisted furnace where it was thermally heated via the furnace to about 1050°C at nominally 15°C/min, then to about 1075°C at nominally 5°C/min, then to about 1100°C at nominally 5°C/min. When 1100°C was reached, the part was held for 10 minutes in a 2kW microwave field. Only the YSZ coating and the bondcoat are visible in the photo, and it is notable that the coating has sintered to full density. The lower photograph shows a higher magnification SEM micrograph of the intersection between the coating, and the substrate illustrating the integrity of the coating/substrate interface. Although a fully dense thermal barrier coating is not a desirable structure from a thermal conductivity standpoint, the example does demonstrate that full density can be achieved using microwave assisted thermal processing. As noted earlier, the microstructure of slurry based coatings can be tailored by additions of binders, sacrificial pore formers and hollow ceramic spheres and the like. It is significant to note that during the microwave assisted sintering of the YSZ coating, the substrate temperature did not exceed 2050°F (1121°C). This was confirmed by a thermocouple placed on the substrate in the vicinity of the interface. It was apparent that the metal substrate reflected the microwave energy and acted as a heat sink that conducted heat away from the coating during processing.

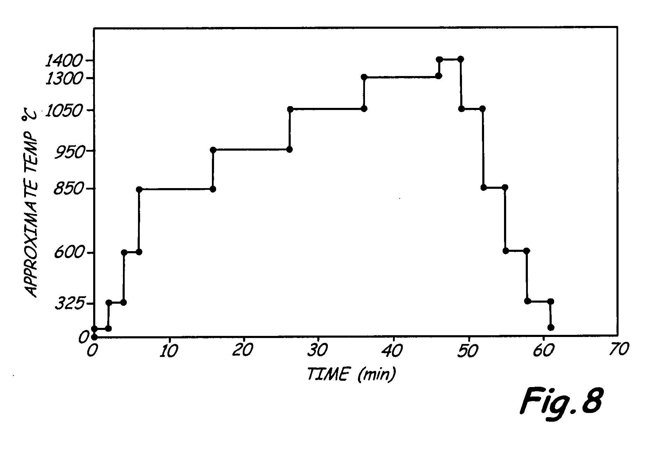

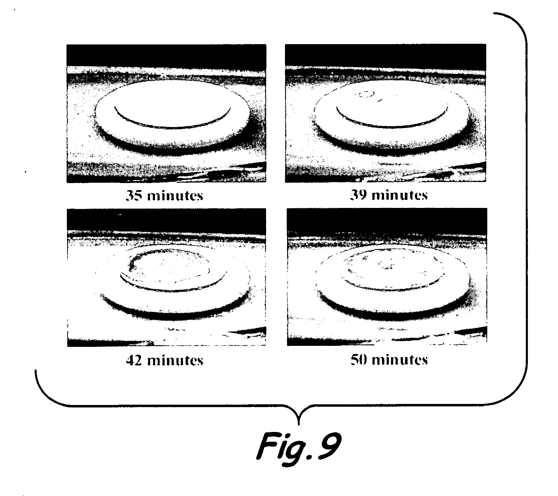

In addition to microwave processing, high density infrared heating using a plasma arc lamp can also be used to heat slurry coated unfired surfaces. Plasma arc heating relies on electromagnetic radiation as a mechanism for rapidly and efficiently transferring radiant heat energy. Highly controllable heat fluxes can be delivered to a target surface and can be optimized to bring about selective surface heating to produce a desired temperature profile. Oak Ridge National Laboratories has a state-of-the-art facility and experience in plasma arc sintering and has demonstrated the technology for unidirectional heating with tremendous cost savings through reduced processing time, reduced operating cost, and environmental friendliness. T. R. Armstrong et al., "Economical Thermal Processing of Solid Oxide Membrane Materials", Proceedings, 16th Annual Conference on Fossil Energy Materials, April 22-24, National Energy Technology Laboratory, Oak Ridge, TN (2002). The primary drawback of the arc heating approach is the potential requirements of complex sample manipulation to access hidden (non-line-of-sight) areas. An example taken from the Armstrong et al. article illustrates the efficiency of plasma arc lamp thermal processing. The plasma arc lamp was used to sinter an yttria stabilized zirconia (YSZ) powder coating on a cast porous nickel oxide (NiO) powder substrate. The densified YSZ layer acts as a solid electrolyte and the NiO base is an electrode. The time temperature profile of the sintering process is shown in FIG. 8. Photographs taken during processing are shown in FIG. 9. The densification during sintering is evident. Normal sintering time for the YSZ-NiO structure is about 36 hours. The speed and efficiency of plasma arc lamp thermal processing are evident.

In addition to the proposed non-conventional heating approaches, other processing variables can be adjusted. For example, slurry routes can be combined with chemical precursor methods such as sol-gel, to achieve improved coatings. Surface preparation, surface pretreatment, sintering atmosphere and other conditions can also be varied to further improve adhesion and densification characteristics. For example, the coatings may be processed in vacuum or an inert atmosphere with flowing N₂ or Ar gases to reduce oxidation of the bond coat. If using air or inert gas it is also possible to induce chemical reactions between the layers to improve adhesion. The use of sol-gel precursors such as metal salts (nitrates, acetates, alkoxides etc.), metal organic compounds (e.g. metal alkoxides) in a slurry might also serve to improve the coating characteristics. Colloidal dispersions of metal oxides such as silica, alumina or zirconia may be used to improve reactivity of the slurry and densification characteristics of the resulting coatings.

Although the present invention has been described with reference to preferred embodiments, workers skilled in the art will recognize that changes may be made in form and detail without departing from the scope of the invention, which is defined by the claims and their equivalents.

## Claims

1. A method for depositing a first protective coating upon the surface of complex-shaped components, designed to operate at temperatures exceeding 2000°F (1093°C), the method comprising:
providing (20) a complex-shaped component;
applying (50) a slurry to the complex-shaped component to deposit a green coating, the slurry including a fluid carrier containing a dispersion of particles of a protective coating or of precursors of the protective coating and other additives contributing to the properties of the coating;
drying (60) the green coating; and
thermally activating (70) the dried coating to result in a sintered and well-adhered protective coating.

2. The method of claim 1, wherein the slurry is applied by dip coating.

3. The method of claim 1, wherein the slurry is applied by at least one of painting or spraying.

4. The method of claim 1, 2 or 3, wherein the coating is at least one of a metallic or ceramic coating.

5. A method of coating a turbine component with a protective coating, the method comprising:
applying (50) a slurry to the turbine component, the slurry comprising a fluid carrier containing a dispersion of particles or precursors of the protective coating;
drying (60) the slurry applied to the turbine component; and
thermally activating (70) the dried slurry to result in a sintered and well-adhered protective coating on the turbine component.

6. The method of claim 5 wherein said article has a complex shape.

7. The method of any preceding claim wherein said component is a component of a gas turbine engine.

8. The method of claim 7 wherein said component comprises at least one of a vane, a rotor, a blade, a combustor liner, a shroud, a transition duct, an airfoil, a tubular component, an integrally bladed rotor, and an integrally bladed vane.

9. The method of any preceding claim wherein a first slurry-based protective coating (30) is a bond coat and a second slurry based protective coating (50) is a Thermal Barrier Coat (TBC) or an Environmental Barrier Coat (EBC).

10. The method of claim 9 wherein a slurry-based intermediate layer is positioned (40) between the bond coat and the thermal barrier coat.

11. The method of claim 10 wherein a slurry-based top coat is positioned on top of the thermal barrier coat.

12. The method of any preceding claim wherein the coating is thermally activated (70) by microwave energy.

13. The method of any of claims 1 to 11 wherein the coating is thermally activated (70) by high energy plasma arc infrared energy.

14. The method of any preceding claim wherein the component is formed of at least one of a nickel-based, cobalt-based, or iron-based superalloy.

15. The method of any of claims 1 to 14 wherein the component is formed of a material comprising at least one of silicon carbide or silicon nitride.
